# EUROPEAN PATENT APPLICATION

(11) **EP 4 742 587 A1**
(43) Date of publication of application: **13.05.2026**
(21) Application number: 24850759.2
(22) Date of filing: 16.07.2024
(51) Int. Cl.: H04L 9/08, H04L 9/32

(54) **REMOTE ATTESTATION METHOD, APPARATUS AND RELATED DEVICE**

(30) Priority: 08.08.2023 CN 202310996999
(71) Applicant: Huawei Technologies Co., Ltd., Shenzhen, Guangdong 518129 (CN)
(72) Inventor: CAI, Qishen, Shenzhen, Guangdong 518129 (CN); XU, Xiangyi, Shenzhen, Guangdong 518129 (CN); JIN, Yier, Shenzhen, Guangdong 518129 (CN)
(74) Representative: Pfenning, Meinig & Partner mbB
(86) International application number: PCT/CN2024/105657
(87) International publication number: WO 2025/031108

(57) **Abstract**

This application provides a remote attestation method and apparatus, and a related device. A first computing device has a trusted execution environment. A registration agent component and an application are deployed in the trusted execution environment. Before loading the application, the first computing device runs the registration agent component in the trusted execution environment to obtain a certificate provided by a challenger to the registration agent component. The certificate is generated by the challenger after verification of the challenger on a remote attestation report provided by the registration agent component succeeds. The first computing device configures the certificate and a private key for the application through the registration agent component. The certificate and the private key are used to establish an encrypted channel between the application and a client. According to the foregoing method, logic of remote attestation and obtaining of a certificate and a private key is completed by an independent registration agent component, so that remote attestation on an existing application can be implemented without modifying the application.

## Description

This application claims priority to Chinese Patent Application No. 202310996999.9, filed with the China National Intellectual Property Administration on August 8, 2023 and entitled "REMOTE ATTESTATION METHOD AND APPARATUS, AND RELATED DEVICE", which is incorporated herein by reference in its entirety.

### TECHNICAL FIELD

The present invention relates to the field of computer technologies, and in particular, to a remote attestation method and apparatus, and a related device.

### BACKGROUND

In confidential computing technologies, a confidential virtual machine is used as a carrier of a trusted execution environment (trusted execution environment, TEE), and supports a user to completely release an existing application without modification to the confidential virtual machine for running. However, the application still needs to have a capability of implementing remote attestation in the trusted execution environment, to support a client to check a trusted status of the trusted execution environment and establishing an encrypted secure channel with the application. However, currently, after the application is deployed in the trusted execution environment without the modification, the application cannot implement the foregoing remote attestation and establish the encrypted channel with the client.

### SUMMARY

This application provides a remote attestation method and apparatus, and a related device, so that in confidential computing, logic of remote attestation and obtaining of a certificate and a private key can be completed by an independent registration agent component, and remote attestation on an existing application can be implemented without modifying the application.

According to a first aspect, this application provides a remote attestation method, applied to a first computing device. The first computing device has a trusted execution environment. A registration agent component and an application are deployed in the trusted execution environment. The method includes: Before loading the application deployed in the trusted execution environment, the first computing device runs the registration agent component to obtain a certificate provided by a challenger to the registration agent component, where the certificate is generated by the challenger after verification of the challenger on a remote attestation report provided by the registration agent component succeeds; and the first computing device configures the certificate and a private key for the application through the registration agent component, where the certificate and the private key are used to establish an encrypted channel between the application and a client.

The foregoing method is performed, so that in confidential computing, logic of remote attestation and obtaining of a certificate and a private key is completed by an independent registration agent component, and remote attestation on an existing application can be implemented without modifying the application.

In a possible implementation, after the registration agent component configures the certificate and the private key for the application, the first computing device loads the application in the trusted execution environment, and establishes the encrypted channel between the application and the client based on the certificate and the private key. After the encrypted channel between the application and the client is established based on the certificate and the private key, the client and the application can support the client to check a trusted status of the trusted execution environment and communicating with the application through the channel.

In a possible implementation, the method further includes: The first computing device runs the registration agent component in the trusted execution environment to obtain a remote attestation challenge sent by the challenger, where the remote attestation challenge includes a random number (number once, nonce); and the first computing device runs the registration agent component to obtain a remote attestation report of the registration agent component based on the random number in the remote attestation component and provide the remote attestation report of the registration agent component to the challenger.

After the first computing device runs the registration agent component in the trusted execution environment, the registration agent component receives the remote attestation challenge of the challenger. For example, the registration agent component initiates a registration request to the challenger, and the challenger sends the remote attestation challenge to the registration agent component, to obtain the remote attestation report of the registration agent component to verify the registration agent component. Adding the random number to the remote attestation challenge can improve remote attestation security.

In a possible implementation, obtaining the remote attestation report of the registration agent component based on the random number includes: The first computing device runs the registration agent component to generate a first asymmetric key pair and obtain the remote attestation report of the registration agent component based on the random number and a first public key in the first asymmetric key pair, where the first asymmetric key pair includes the first public key and a first private key.

In a possible implementation, obtaining the remote attestation report of the registration agent component based on the random number includes: The first computing device runs the registration agent component to generate a first asymmetric key pair, where the first asymmetric key pair includes a first public key and a first private key; the first computing device runs the registration agent component to generate a certificate signing request (certificate signing request, CSR) of the registration agent component based on the first asymmetric key pair; and the first computing device runs the registration agent component to obtain the remote attestation report of the registration agent component based on the random number and the CSR.

In a possible implementation, the private key is the first private key of the first asymmetric key pair; or the private key is generated and provided by the challenger to the registration agent component after the verification of the challenger on the remote attestation report of the registration agent component succeeds.

In a possible implementation, the challenger is a certificate service component run on the first computing device. The certificate service component is deployed in a normal world (normal world) of the first computing device. The method further includes: The first computing device runs the certificate service component to generate the certificate and the private key when the verification on the remote attestation report of the registration agent component succeeds; the first computing device runs the certificate service component to generate a symmetric key and obtain the first public key of the first asymmetric key pair carried in the remote attestation report of the registration agent component; the first computing device runs the certificate service component to encrypt the certificate and the private key using the symmetric key, to obtain a first digest; then, the first computing device runs the certificate service component to encrypt the symmetric key using the first public key, to obtain a second digest; and the first computing device runs the certificate service component to provide the first digest and the second digest to the registration agent component.

In a possible implementation, the method further includes: The first computing device runs the registration agent component to decrypt the second digest using the first private key, to obtain the symmetric key, and then decrypt the first digest using the symmetric key, to obtain the certificate and the private key.

In a possible implementation, the method further includes: The first computing device runs the certificate service component to send a CSR of the certificate service component to a verifier; and the first computing device runs the certificate service component to receive a certificate issued by the verifier to the certificate service component, where certificate of the certificate service component is generated by the verifier when verification on the CSR of the certificate service component succeeds.

In a possible implementation, the challenger is a verifier (Verifier). For example, the verifier may be a certificate authority (Certificate Authority, CA). Alternatively, the challenger is a second computing device. The second computing device can implement a function of the certificate service component. To be specific, the second computing device can succeed in verification of the verifier by performing the function of the certificate service component.

According to a second aspect, this application provides a remote attestation method. The method includes: A challenger initiates a remote attestation challenge to a registration agent component run in a trusted execution environment of a first computing device, where the registration agent component and an application are deployed in the trusted execution environment of the first computing device; and the challenger provides a certificate to the registration agent component after verification on a remote attestation report of the registration agent component succeeds, so that the registration agent component configures the certificate for the application, where the remote attestation report is provided by the registration agent component to the challenger in response to the remote attestation challenge, and the certificate is used by the first computing device to establish, when the first computing device loads the application in the trusted execution environment, an encrypted channel between the application and a client based on the certificate and a private key.

In a possible implementation, the method further includes: The challenger provides the private key to the registration agent component, where the private key is generated by the challenger after the verification on the remote attestation report of the registration agent component succeeds.

In a possible implementation, the method further includes: The challenger generates the certificate and the private key when the verification on the remote attestation report succeeds; and generates a symmetric key, and obtains a first public key in the remote attestation report of the registration agent component; and then the challenger encrypts the certificate and the private key using the symmetric key, to obtain a first digest; and encrypts the symmetric key using the first public key, to obtain a second digest. That the challenger provides the private key to the registration agent component of the first computing device includes: The challenger provides the first digest and the second digest to the registration agent component.

In a possible implementation, before the challenger initiates the remote attestation challenge to the registration agent component run in the trusted execution environment of the first computing device, the method further includes: The challenger sends a certificate signing request CSR of the challenger to a verifier; and the challenger receives a certificate of the challenger issued by the verifier, where the certificate of the challenger is generated by the verifier when verification on the CSR of the challenger succeeds.

According to a third aspect, this application provides a remote verification method, applied to a system including a registration agent component and a challenger. A first computing device has a trusted execution environment. An application and the registration agent component are deployed in the trusted execution environment of the first computing device. The method includes: The challenger initiates a remote attestation challenge to the registration agent component run in the trusted execution environment of the first computing device; and the first computing device obtains a certificate provided by the challenger to the registration agent component, and then configuring the certificate and a private key for the application through the registration agent component, where the certificate is generated by the challenger after verification of the challenger on a remote attestation report provided by the registration agent component succeeds; the certificate and the private key are used by the computing device to establish an encrypted channel between the application and a client when the computing device loads the application in the trusted execution environment.

In a possible implementation, the method further includes: The first computing device loads the application in the trusted execution environment, and establishes the encrypted channel between the application and the client based on the certificate and the private key.

In a possible implementation, the method further includes: The challenger initiates a remote attestation challenge to the registration agent component, where the remote attestation challenge includes a random number; and the registration agent component obtains the remote attestation report of the registration agent component based on the random number, and provides the remote attestation report of the registration agent component to the challenger.

In a possible implementation, that the first computing device obtains the remote attestation report based on the random number includes: The first computing device runs the registration agent component to generate a first asymmetric key pair, where the first asymmetric key pair includes a first public key and a first private key; and the first computing device runs the registration agent component to obtain the remote attestation report based on the random number and the first public key.

In a possible implementation, that the first computing device obtains the remote attestation report based on the random number includes: The first computing device runs the registration agent component to generate a first asymmetric key pair, where the first asymmetric key pair includes a first public key and a first private key; the first computing device runs the registration agent component to generate a certificate signing request CSR of the computing device based on the first asymmetric key pair; and the first computing device runs the registration agent component to obtain the remote attestation report based on the random number and the CSR.

In a possible implementation, the private key is the first private key; or the private key is generated and provided by the challenger to the registration agent component after the verification of the challenger on the remote attestation report succeeds.

In a possible implementation, when the private key is generated by the challenger, the method further includes: The challenger generates the certificate and the private key when the verification on the remote attestation report succeeds; and generates a symmetric key, and obtains the first public key in the remote attestation report of the registration agent component; and then the challenger encrypts the certificate and the private key using the symmetric key, to obtain a first digest; and encrypts the symmetric key using the first public key, to obtain a second digest. That the challenger provides the private key to the registration agent component of the first computing device includes: The challenger provides the first digest and the second digest to the registration agent component.

In a possible implementation, the method further includes: The registration agent component decrypts the second digest using the first private key, to obtain the symmetric key; and the registration agent component decrypts the first digest using the symmetric key, to obtain the certificate and the private key.

In a possible implementation, the challenger is a verifier.

In a possible implementation, the challenger is a certificate service component. The certificate service component and the registration agent component are located on a same computing device, or the certificate service component and the registration agent component are located on different computing devices. When the certificate service component and the registration agent component are located on a same computing device, the certificate service component is deployed in a normal world of the first computing device.

In a possible implementation, before the challenger initiates the remote attestation challenge to the registration agent component, the method further includes: The challenger sends a remote attestation report of the challenger to the verifier; and the challenger receives a certificate sent by the verifier to the challenger, where the certificate sent by the verifier to the challenger is generated by the verifier when verification on the remote attestation report of the challenger succeeds.

According to a fourth aspect, this application provides a remote attestation apparatus, including an application and a registration agent component. The registration agent component and the application are deployed in a trusted execution environment. The registration agent component is used to: before the application is started, obtain a certificate provided by a challenger to the registration agent component, where the certificate is generated by the challenger after verification of the challenger on a remote attestation report provided by the registration agent component succeeds; and configure the certificate and a private key for the application, where the certificate and the private key are used to establish an encrypted channel between the application and a client.

In a possible implementation, the application is used to establish the encrypted channel between the application and the client based on the certificate and the private key.

In a possible implementation, the registration agent component is further used to: obtain a remote attestation challenge sent by the challenger, where the remote attestation challenge includes a random number; and obtain the remote attestation report of the registration agent component based on the random number in the remote attestation challenge, and provide the remote attestation report of the registration agent component to the challenger.

In a possible implementation, the registration agent component is specifically used to: generate a first asymmetric key pair, and obtain the remote attestation report of the registration agent component based on the random number and a first public key in the first asymmetric key pair, where the first asymmetric key pair includes the first public key and a first private key.

In a possible implementation, the registration agent component is specifically used to: generate a first asymmetric key pair, generate a CSR of the registration agent component based on the first asymmetric key pair, and obtain the remote attestation report of the registration agent component based on the random number and the CSR, where the first asymmetric key pair includes a first public key and a first private key.

In a possible implementation, the private key is the first private key of the first asymmetric key pair; or the private key is generated and provided by the challenger to the registration agent component after the verification of the challenger on the remote attestation report of the registration agent component succeeds.

In a possible implementation, the remote attestation apparatus further includes a certificate service component. The certificate service component is used to: generate the certificate and the private key when the verification on the remote attestation report of the registration agent component succeeds; generate a symmetric key, and obtain the first public key in the remote attestation report of the registration agent component; encrypt the certificate and the private key using the symmetric key, to obtain a first digest; encrypt the symmetric key using the first public key, to obtain a second digest; and provide the first digest and the second digest to the registration agent component.

In a possible implementation, the registration agent component is further used to: decrypt the second digest using the first private key, to obtain the symmetric key, and then decrypt the first digest using the symmetric key, to obtain the certificate and the private key.

In a possible implementation, the remote attestation apparatus further includes a communication module. The communication module is configured to: send a CSR of the certificate service component to a verifier; and receive a certificate issued by the verifier to the certificate service component, where the certificate of the certificate service component is generated by the verifier when verification on the CSR of the certificate service component succeeds.

In a possible implementation, the challenger is a verifier (Verifier). For example, the verifier may be a certificate authority (Certificate Authority, CA). Alternatively, the challenger is a second computing device. The second computing device can implement a function of the certificate service component. To be specific, the second computing device can succeed in verification of the verifier by performing the function of the certificate service component.

According to a fifth aspect, this application provides a remote attestation apparatus, including:
a processing module, configured to initiate a remote attestation challenge to a registration agent component run in a trusted execution environment of a first computing device, where the registration agent component and an application are deployed in the trusted execution environment of the first computing device; and
a communication module, configured to send the remote attestation challenge to the first computing device, where
the processing module is further configured to generate a certificate of the registration agent component when verification on a remote attestation report of the registration agent component succeeds, so that the registration agent component configures the certificate for the application, where the remote attestation report is provided by the registration agent component to a challenger in response to the remote attestation challenge, and the certificate is used by the first computing device to establish, when the first computing device loads the application in the trusted execution environment, an encrypted channel between the application and a client based on the certificate and a private key; and
the communication module is further configured to send the certificate to the first computing device.

According to a sixth aspect, this application provides a computing device, including a processor and a memory. The memory is configured to store instructions. The processor is configured to execute the instructions. When the processor executes the instructions, the method according to any one of the first aspect and the possible implementations of the first aspect is implemented.

According to a seventh aspect, this application provides another computing device, including a processor and a memory. The memory is configured to store instructions. The processor is configured to execute the instructions. When the processor executes the instructions, the method according to any one of the second aspect and the possible implementations of the second aspect is implemented.

According to an eighth aspect, this application provides a computer program product. When the computer program product runs on a server, a computing device is enabled to perform the method according to any one of the first aspect and the possible implementations of the first aspect, or perform the method according to any one of the second aspect and the possible implementations of the second aspect.

According to a ninth aspect, this application provides a computer-readable storage medium. The computer-readable storage medium stores instructions. When the instructions are run on a computing device, the computing device is enabled to perform the method according to any one of the first aspect and the possible implementations of the first aspect, or perform the method according to any one of the second aspect and the possible implementations of the second aspect.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is a diagram of a system for implementing remote verification according to an embodiment of this application;
FIG. 2 is a diagram of another system for implementing remote verification according to an embodiment of this application;
FIG. 3A and FIG. 3B are an interaction diagram of a remote verification method according to an embodiment of this application;
FIG. 4 is a diagram of another system for implementing remote verification according to an embodiment of this application;
FIG. 5 is a diagram of another system for implementing remote verification according to an embodiment of this application;
FIG. 6 is a diagram of a remote attestation apparatus according to an embodiment of this application;
FIG. 7 is a diagram of another remote attestation apparatus according to an embodiment of this application; and
FIG. 8 is a diagram of a computing device according to an embodiment of this application.

### DESCRIPTION OF EMBODIMENTS

With reference to accompanying drawings, the following describes technical solutions in this application.

Through separation of resource management from resource access control, confidential computing can make application security independent of an underlying software stack. Currently, confidential computing technologies mainly develop toward compatibility with existing applications. For example, a confidential virtual machine is used as a carrier of a trusted execution environment (trusted execution environment, TEE), and can support a user to completely release the existing application without modification to the confidential virtual machine and running the existing application.

Although the confidential virtual machine supports the existing application to run in the trusted execution environment without the modification, the application still needs to have a capability of implementing remote verification in the trusted execution environment, to support a client in checking a trusted status of the trusted execution environment and establishing an encrypted secure channel with the application. However, currently, after the application is deployed in the trusted execution environment without the modification, the application cannot implement the foregoing remote verification and establish the encrypted channel with the client.

Embodiments of this application provide a remote attestation method, so that after an existing application is deployed in a trusted execution environment without modification, remote verification on the application can be implemented, and an encrypted channel can be established between the existing application and a client based on a result of the remote verification.

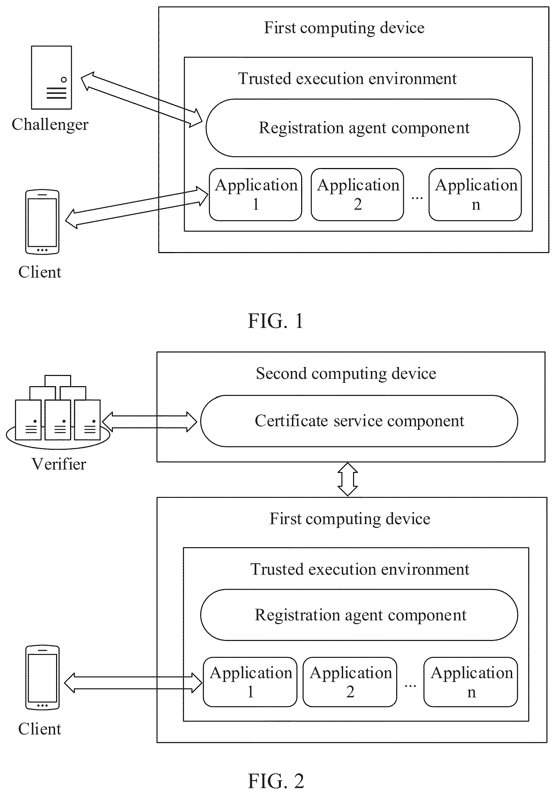

As shown in FIG. 1, FIG. 1 is a diagram of a system for implementing remote attestation according to an embodiment of this application. The system includes a first computing device and a challenger. The first computing device has a trusted execution environment. For example, a confidential virtual machine is used as a carrier of the trusted execution environment. When an application needs to be loaded in the trusted execution environment, the first computing device first runs a registration agent component in the trusted execution environment to obtain a certificate from the challenger through the registration agent component. Then, the first computing device configures the certificate and a private key for the application through the registration agent component, to complete remote attestation on the application. The private key may be a private key in an asymmetric key pair generated by the first computing device by running the registration agent component, or may be provided by the challenger to the registration agent component after the challenger generates the private key. It should be noted that the application needs to be packaged and released together with the registration agent component.

After the remote attestation is implemented through the registration agent component, the first computing device loads the application in the TEE, and establishes an encrypted channel between the application and a client based on the certificate and the private key. For example, the encrypted channel between the application and the client is established through a standard transport layer security (Transport Layer Security, TLS) protocol, the certificate, and the private key.

The challenger may be a verifier (Verifier). For example, the verifier may be a certificate authority (Certificate Authority, CA). The challenger may alternatively be a component run on a computing device, and is referred to as a certificate service component in this embodiment of this application. The computing device has a certificate verification and issuing function by running the certificate service component. It should be noted that, before being used as the challenger, the certificate service component needs to apply for registration with the verifier, and can be used as the challenger only after obtaining a certificate issued by the verifier.

The computing device running the certificate service component may be the first computing device, or may be a computing device different from the first computing device. When the computing device running the certificate service component is the first computing device, the registration agent component is run in the TEE, and the certificate service component is run in a normal world (normal world).

According to the foregoing method, logic of remote attestation and obtaining of a certificate and a private key is completed by an independent registration agent component, so that remote attestation and establishment of an encrypted channel with a client can be implemented without modifying an existing application.

The following describes in detail the remote attestation method provided in embodiments of this application by using an example in which the challenger is a computing device that can run the certificate service component and that is a second computing device different from the first computing device. As shown in FIG. 2, FIG. 2 is a diagram of another system for implementing remote verification according to an embodiment of this application. The system includes a first computing device, a second computing device, and a verifier (Verifier). The first computing device has a TEE. The registration agent component and an application can be run in the TEE. The second computing device can run the certificate service component.

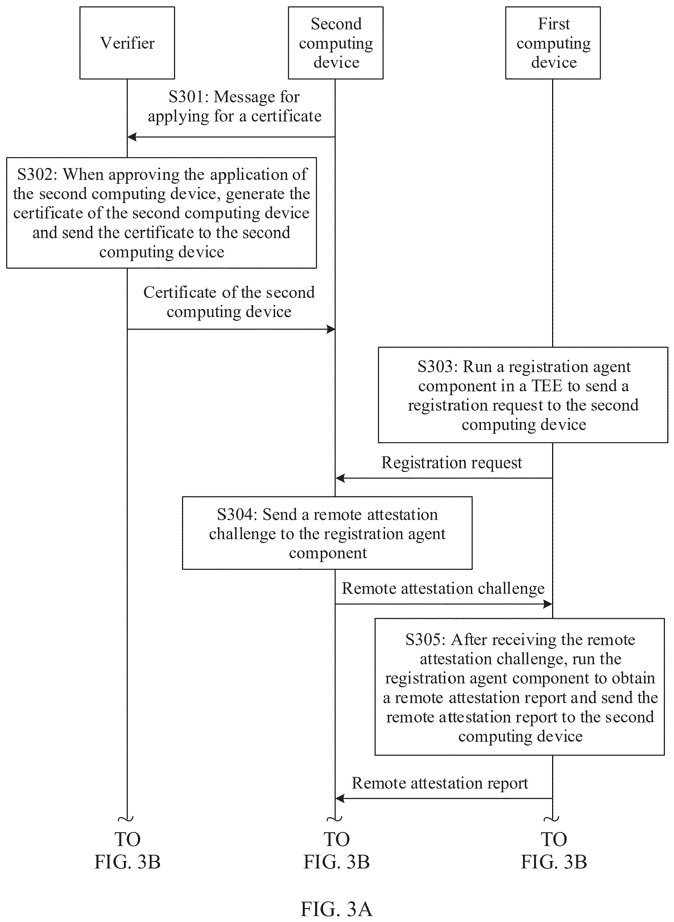

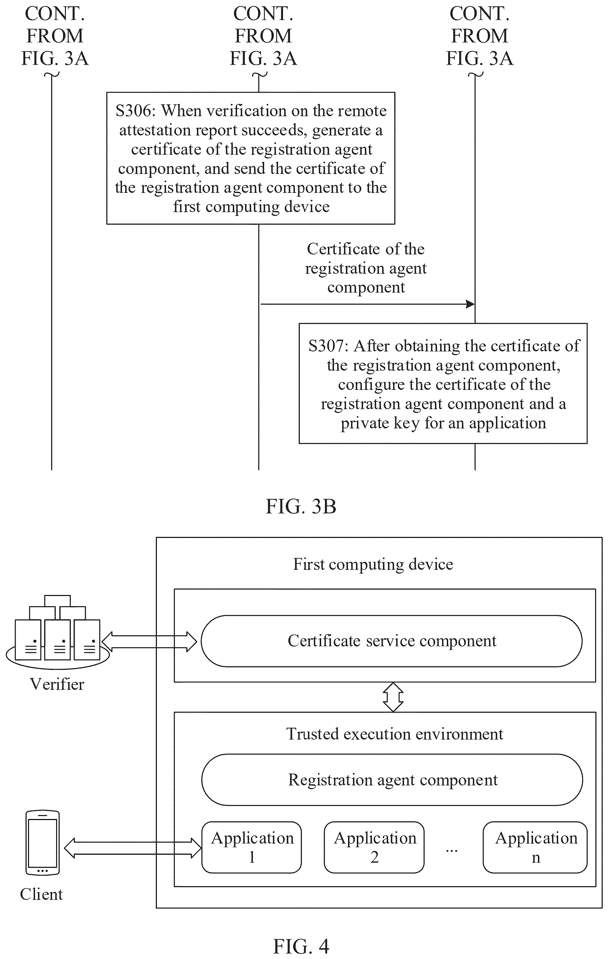

With reference to FIG. 2, the following describes in detail the remote attestation method provided in embodiments of this application. As shown in FIG. 3A and FIG. 3B, FIG. 3A and FIG. 3B are an interaction diagram of a remote attestation method according to an embodiment of this application. The remote attestation method includes the following S301 to S307.

S301: The second computing device sends, to the verifier, a message used to apply for a certificate.

The second computing device runs the certificate service component to generate a second asymmetric key pair, generate a certificate signing request (certificate signing request, CSR) of the second computing device based on the second asymmetric key pair, and send, to the verifier (Verifier), a message carrying the CSR of the second computing device. The message is used to apply for the certificate from the verifier.

S302: When approving the application of the second computing device, the verifier generates the certificate of the second computing device and sends the certificate to the second computing device.

The verifier verifies the CSR carried in the message sent by the second computing device. When the verification on the CSR succeeds, the verifier generates the certificate of the second computing device, and sends the certificate of the second computing device to the second computing device. After receiving the certificate sent by the verifier, the second computing device has a function and permission for the remote verification and certificate issuing.

S303: The first computing device runs the registration agent component in the TEE to send a registration request to the second computing device.

Before running the application in the TEE, the first computing device needs to first run the registration agent component in the TEE to generate the registration request and send the registration request to the second computing device. The registration request is used to request the second computing device to obtain a certificate of the registration agent component. The registration request includes information such as a universally unique identifier (universally unique identifier, UUID) of the application and a TEE type.

S304: After receiving the registration request sent by the first computing device, the second computing device initiates a remote attestation challenge to the registration agent component.

After receiving the registration request sent by the first computing device, the second computing device sends the remote attestation challenge to the registration agent component. The remote attestation challenge includes a random number (number once, nonce).

S305: After receiving the remote attestation challenge, the first computing device runs the registration agent component to obtain a remote attestation report and send the remote attestation report to the second computing device.

After receiving the remote attestation challenge, the first computing device generates a first asymmetric key pair through the registration agent component, where the first asymmetric key pair includes a first private key and a first public key; and then invokes, based on the random number and the first public key in the first asymmetric key pair generated by the registration agent component, an interface function for obtaining the remote attestation report, to obtain the remote attestation report of the registration agent component. For example, the registration agent component invokes the interface function for obtaining the remote attestation report, to obtain the remote attestation report of the registration agent component by using the random number and the first public key as an input of the interface function or by using, as the input of the interface function, a hash value of a character string formed by combining the random number and the first public key.

In a possible implementation, the first computing device can further generate a CSR of the registration agent component. The registration agent component can further obtain the remote attestation report of the registration agent component based on the random number and the CSR of the registration agent component that are used as the input of the interface function. Then, the remote attestation report of the registration agent component and the CSR of the registration agent component are sent to the second computing device.

S306: When verification on the remote attestation report succeeds, the second computing device generates the certificate of the registration agent component, and sends the certificate of the registration agent component to the first computing device.

After receiving the remote attestation report of the registration agent component sent by the first computing device, the second computing device verifies the remote attestation report of the registration agent component, when the verification on the remote attestation report of the registration agent component succeeds, issues the certificate to the registration agent component, that is, generates the certificate of the registration agent component, and sends the certificate of the registration agent component to the first computing device.

It should be understood that, if the first computing device further sends the CSR of the registration agent component to the second computing device in S305, the second computing device further needs to verify integrity of the CSR of the registration agent component, and issues the certificate to the registration agent component if both the verification on the remote attestation report and the verification on the CSR of the registration agent component succeeds.

In a possible implementation, the second computing device may further generate a symmetric key and a third asymmetric key pair. The third asymmetric key pair includes a third public key and a third private key. Then, the second computing device encrypts, using the symmetric key, the certificate of the registration agent component and the third private key in the third asymmetric key pair generated by the second device, to obtain a first digest; and encrypts, using the first public key carried in the remote attestation report, the symmetric key generated by the second computing device, to obtain a second digest. Finally, the second computing device sends the first digest and the second digest to the first computing device.

S307: After obtaining the certificate of the registration agent component, the first computing device configures the certificate of the registration agent component and a private key for the application.

After obtaining the certificate of the registration agent component sent by the second computing device, the first computing device configures, through the registration agent component, the certificate of the registration agent component for the application that needs to be run in the TEE, and configures the private key for the application, to complete remote attestation on the application. If the second computing device does not send the private key to the first computing device, the private key configured for the application is a private key in an asymmetric key pair generated by the first computing device by running the registration agent component in S305, namely, the first private key.

In a possible implementation, if the second computing device sends the certificate of the registration agent component to the first computing device in a manner of the first digest and the second digest in S306, the first computing device decrypts the second digest using the first private key in the first asymmetric key pair generated in S305, to obtain the symmetric key generated by the second computing device; and then decrypts the first digest using the symmetric key, to obtain the certificate of the registration agent component and a private key in an asymmetric key pair generated by the second device, namely, the third private key. In this case, the private key configured for the application is the private key obtained from the first digest, namely, the third private key.

According to the foregoing method, logic of remote attestation and obtaining of a certificate and a private key is completed by an independent registration agent component, so that remote attestation on an existing application can be implemented without modifying the application.

After the remote attestation on the application is implemented through the registration agent component, the first computing device loads the application in the TEE, and establishes an encrypted channel between the application and a client based on the certificate and the private key. For example, the encrypted channel between the application and the client is established through a standard transport layer security TLS protocol, the certificate, and the private key. It should be understood that, before the client establishes the encrypted channel with the application, the client needs to download a CA root certificate from the verifier.

The foregoing describes the remote attestation method provided in embodiments of this application by using an example in which the challenger is the certificate service component and the certificate service component and the registration agent component are not located on a same computing device. In a possible implementation, the certificate service component and the registration agent component may alternatively be located on a same computing device. For example, both the certificate service component and the registration agent component may be located on the first computing device. As shown in FIG. 4, FIG. 4 is a diagram of another system for implementing remote attestation according to an embodiment of this application. When both the certificate service component and the registration agent component are located on the first computing device, the registration agent component is run in the TEE of the first computing device, and the certificate service component is run in a normal world (normal world) of the first computing device.

When the certificate service component and the registration agent component are run on the first computing device, a process of implementing the remote attestation includes a process of interaction between the certificate service component run on the first computing device and a verifier and a process of interaction between the certificate service component and the registration agent component that are run on the first computing device. For the process of the interaction between the certificate service component run on the first computing device and the verifier, refer to the process of the interaction between the second computing device and the verifier in the embodiment corresponding to FIG. 3A and FIG. 3B. It should be understood that a CSR of the certificate service component is carried when the first computing device runs the certificate service component to send, to the verifier, a message used to apply for a certificate, and the verifier issues the certificate to the certificate service component after verification on the CSR of the certificate service component succeeds.

For the process of the interaction between the certificate service component and the registration agent component that are run on the first computing device, refer to the process of the interaction between the certificate service component run on the second computing device and the first computing device in the embodiment corresponding to FIG. 3A and FIG. 3B. After the first computing device runs the registration agent component in the TEE, the registration agent component sends a registration request to the certificate service component. After obtaining the registration request, the certificate service component initiates a remote attestation challenge to the registration agent component. In this case, the registration agent component obtains a remote report of the registration agent component and provides the remote report to the certificate service component. After verification on the remote attestation report succeeds, the certificate service component generates a certificate of the registration agent component and issues the certificate to the registration agent component. A specific implementation is not described herein again. It should be understood that, because both the certificate service component and the registration agent component are run on the first computing device, related operations such as sending and receiving between the first computing device and the second computing device do not exist.

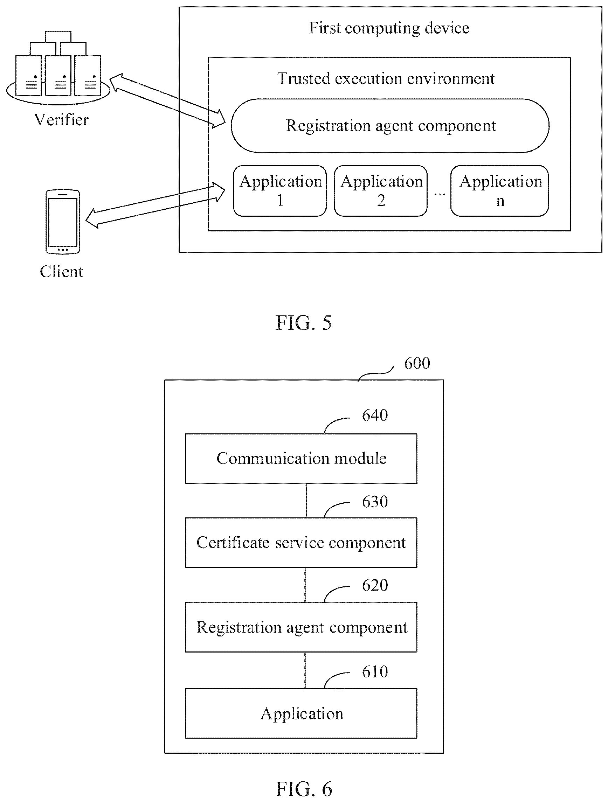

In a possible implementation, the challenger may alternatively be a verifier. To be specific, the certificate service component does not exist in the system for implementing remote attestation. As shown in FIG. 5, FIG. 5 is a diagram of another system for implementing remote attestation according to an embodiment of this application. In the system shown in FIG. 5, the first computing device runs the registration agent component in the TEE, and then interacts with the verifier to implement a remote attestation process. For the remote attestation process implemented through the interaction between the registration agent component run on the first computing device and the verifier, refer to the process of the interaction between the registration agent component run on the first computing device and the certificate service component run on the second computing device in the embodiment corresponding to FIG. 3A and FIG. 3B. To be specific, the operations of S301 and S302 do not exist in the remote attestation process implemented through the interaction between the registration agent component run on the first computing device and the verifier. In the remote attestation process implemented through the interaction between the registration agent component run on the first computing device and the verifier, the verifier is configured to implement the operations implemented by the certificate service component run on the second computing device in the embodiment corresponding to FIG. 3A and FIG. 3B. Details are not described herein again.

For brief description, the foregoing method embodiments are all described as a combination of a series of actions. However, a person skilled in the art should understand that the present invention is not limited to the described action sequence. In addition, a person skilled in the art should also understand that all embodiments described in this specification are preferred embodiments, and the related actions are not necessarily mandatory to the present invention. Another appropriate proper step combination that can be figured out by a person skilled in the art based on the content described above shall also fall within the protection scope of the present invention. For example, in the embodiment shown in FIG. 3A and FIG. 3B, alternatively, the first computing device may not actively send the registration request to the second computing device, but the second computing device actively initiates the remote attestation challenge to the first computing device when running the certificate service component.

Embodiments of this application further provide a remote attestation apparatus. As shown in FIG. 6, FIG. 6 is a diagram of a remote attestation apparatus according to an embodiment of this application. The remote attestation apparatus 600 includes an application 610 and a registration agent component 620. The application 610 and the registration agent component 620 are deployed in a trusted execution environment. The registration agent component 620 is used to: before the application is started, obtain a certificate provided by a challenger to the registration agent component. The certificate is generated by the challenger after verification of the challenger on a remote attestation report provided by the registration agent component 620 succeeds. After obtaining the certificate, the registration agent component 620 configures the certificate and a private key for the application 610. The certificate and the private key are used to establish an encrypted channel between the application 610 and a client.

In a possible implementation, the application 610 is used to establish the encrypted channel between the application and the client based on the certificate and the private key.

In a possible implementation, the registration agent component 620 is further used to: obtain a remote attestation challenge sent by the challenger, where the remote attestation challenge includes a random number; and obtain the remote attestation report of the registration agent component based on the random number in the remote attestation challenge, and provide the remote attestation report of the registration agent component to the challenger.

In a possible implementation, the remote attestation apparatus 600 further includes a certificate service component 630. The certificate service component is used to: generate the certificate and the private key when the verification on the remote attestation report of the registration agent component succeeds; generate a symmetric key, and obtain a first public key in the remote attestation report of the registration agent component; encrypt the certificate and the private key using the symmetric key, to obtain a first digest; encrypt the symmetric key using the first public key, to obtain a second digest; and provide the first digest and the second digest to the registration agent component.

In a possible implementation, the registration agent component 620 is further used to: decrypt the second digest using the first private key, to obtain the symmetric key, and then decrypt the first digest using the symmetric key, to obtain the certificate and the private key.

In a possible implementation, the remote attestation apparatus 600 further includes a communication module 640. The communication module is configured to: send a CSR of the certificate service component to a verifier; and receive a certificate issued by the verifier to the certificate service component, where the certificate of the certificate service component is generated by the verifier when verification on the CSR of the certificate service component succeeds.

In a possible implementation, the challenger is a verifier. For example, the verifier may be a certificate authority (Certificate Authority, CA). Alternatively, the challenger is a second computing device. The second computing device can implement a function of the certificate service component. To be specific, the second computing device can succeed in verification of the verifier by performing the function of the certificate service component.

Specifically, the remote attestation apparatus 600 is configured to implement the operations implemented by the first computing device in the embodiment shown in FIG. 3A and FIG. 3B. When the remote attestation apparatus 600 includes the certificate service component 630, the remote attestation apparatus 600 is further configured to implement the operations implemented by the second computing device in the embodiment shown in FIG. 3A and FIG. 3B.

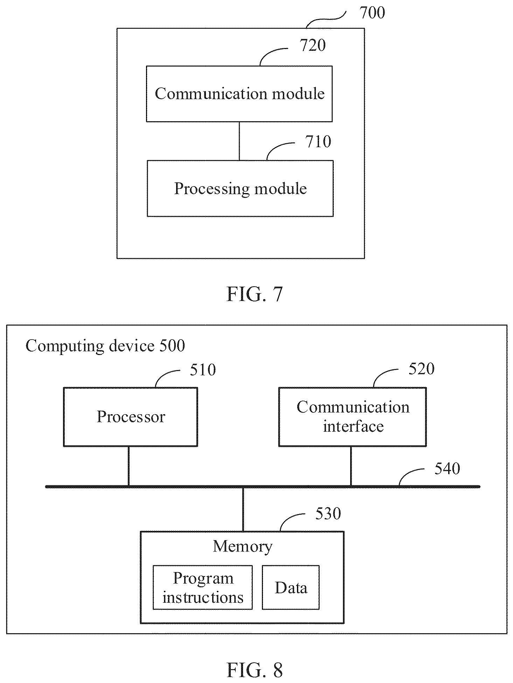

Embodiments of this application further provide a remote attestation apparatus. As shown in FIG. 7, FIG. 7 is a diagram of another remote attestation apparatus according to an embodiment of this application. The remote attestation apparatus 700 includes a processing module 710 and a communication module 720.

The processing module 710 is configured to initiate a remote attestation challenge to a registration agent component run in a trusted execution environment of a first computing device, where the registration agent component and an application are deployed in the trusted execution environment of the first computing device. The communication module 720 is configured to send the remote attestation challenge to the first computing device.

The processing module 710 is further configured to generate a certificate of the registration agent component when verification on a remote attestation report of the registration agent component succeeds, so that the registration agent component configures the certificate for the application, where the remote attestation report is provided by the registration agent component to a challenger in response to the remote attestation challenge, and the certificate is used by the first computing device to establish, when the first computing device loads the application in the trusted execution environment, an encrypted channel between the application and a client based on the certificate and a private key. The communication module 720 is further configured to send the certificate to the first computing device.

Specifically, the remote attestation apparatus 700 is configured to implement the operations implemented by the second computing device in the embodiment shown in FIG. 3A and FIG. 3B. Details are not described herein again.

Embodiments of this application further provide a computing device. As shown in FIG. 8, FIG. 8 is a diagram of a computing device according to an embodiment of this application. The computing device 500 includes one or more processors 510, a communication interface 520, and a memory 530. The one or more processors 510, the communication interface 520, and the memory 530 are connected to each other through a bus 540.

The processor 510 may be configured to implement the operations correspondingly performed by the first computing device in the foregoing method embodiments. For a method for implementing the first computing device by the processor 510, refer to the descriptions in the foregoing method embodiments. Details are not described herein again.

The communication interface 520 may be a wired interface or a wireless interface, and is configured to communicate with another module or device. The wired interface may be an ethernet interface, a local interconnect network (local interconnect network, LIN), or the like. The wireless interface may be a cellular network interface, a wireless local area network interface, or the like.

The memory 530 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 530 may alternatively be a volatile memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 530 may also be configured to store program instructions and data, so that the processor 510 invokes the program instructions stored in the memory 530 to perform the operation steps of the first computing device in the foregoing method embodiments. In addition, the computing device 500 may include more or fewer components than those shown in FIG. 5, or an arrangement of different components.

The bus 540 may be a peripheral component interconnect (peripheral component interconnect, PCI) bus, an extended industry standard architecture (extended industry standard architecture, EISA) bus, or the like. The bus 540 may be classified into an address bus, a data bus, a control bus, and the like. For ease of representation, only one bold line is used for representation in FIG. 5, but this does not mean that there is only one bus or only one type of bus.

It should be noted that the processor 510 may be a central processing unit (Central Processing Unit, CPU), or may include the CPU and another hardware chip. The hardware chip may be of a plurality of types. For example, an accelerator card may be a coprocessing unit, including any one of chips such as a graphics processing unit (graphics processing unit, GPU), a tensor processing unit (tensor processing unit, TPU), a programmable logic device (programmable logic device, PLD), a complex programmable logic device (complex programmable logic device, CPLD), a field programmable gate array (field programmable gate array, FPGA), or a digital signal processor (digital signal processor, DSP). The computing device 500 may include one or more hardware chips of any one of the foregoing types, or may include a plurality of types hardware chips. This is not specifically limited in embodiments of this application.

Specifically, for a specific implementation of performing various operations by the computing device 500, refer to the specific operations performed by the first computing device in the foregoing method embodiments. Details are not described herein again.

It should be noted that, if the management module and the evaluation module are deployed on different devices, that is, the management device and the evaluation device are not a same device, an embodiment of this application further provides another computing device. The computing device has a diagram of a structure the same as the diagram of the structure of the computing device 500 shown in FIG. 5, and is configured to perform the operations completed by the management device. Details are not described herein again.

An embodiment of this application further provides a computer-readable storage medium. The computer-readable storage medium stores instructions. When the instructions are run on a processor, the method steps implemented by the evaluation device in the foregoing method embodiments may be implemented. For a specific implementation of the processor for the computer-readable storage medium in performing the foregoing method steps, refer to the specific operations of the foregoing method embodiments. Details are not described herein again.

An embodiment of this application further provides a computer-readable storage medium. The computer-readable storage medium stores instructions. When the instructions are run on a processor, the method steps implemented by the management device in the foregoing method embodiments may be implemented. For a specific implementation of the processor for the computer-readable storage medium in performing the foregoing method steps, refer to the specific operations of the foregoing method embodiments. Details are not described herein again.

In the foregoing embodiments, the descriptions of each embodiment have respective focuses. For a part that is not described in detail in an embodiment, refer to related descriptions in other embodiments.

The foregoing embodiments may be all or partially implemented by software, hardware, firmware, or any combination thereof. When being implemented by the software, the foregoing embodiments may be all or partially implemented in a form of a computer program product. The computer program product includes one or more computer instructions. When the computer program instructions are loaded or executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium, or a semiconductor medium. The semiconductor medium may be a solid-state drive (solid-state drive, SSD).

The steps in the methods in embodiments of this application may be sequence-adjusted, combined, or deleted based on an actual requirement. The modules in the apparatuses in embodiments of this application may be obtained through division, combined, or deleted based on an actual requirement.

Embodiments of this application are described in detail above. The principle and implementation of this application are described herein through specific examples. The descriptions of the foregoing embodiments are provided merely to help understand the method and core ideas of this application. In addition, a person of ordinary skill in the art can make variations and modifications to this application in terms of the specific implementations and application scopes according to the ideas of this application. Therefore, the content of this specification shall not be construed as a limit to this application.

## Claims

1. A remote attestation method, wherein a first computing device has a trusted execution environment, a registration agent component and an application are deployed in the trusted execution environment, and the method comprises:
obtaining, by the first computing device through the registration agent component before loading the application, a certificate provided by a challenger to the registration agent component; and
configuring, by the first computing device, the certificate and a private key for the application through the registration agent component, wherein the certificate and the private key are used to establish an encrypted channel between the application and a client.

2. The method according to claim 1**,** further comprising:
loading, by the first computing device, the application in the trusted execution environment, and establishing the encrypted channel between the application and the client based on the certificate and the private key.

3. The method according to claim 1 or 2, further comprising:
running, by the first computing device, the registration agent component to obtain a remote attestation challenge initiated by the challenger, wherein the remote attestation challenge comprises a random number; and
running, by the first computing device, the registration agent component to obtain a remote attestation report of the registration agent component based on the random number and provide the remote attestation report of the registration agent component to the challenger.

4. The method according to claim 3, wherein obtaining the remote attestation report of the registration agent component based on the random number comprises:
running, by the first computing device, the registration agent component to generate a first asymmetric key pair, wherein the first asymmetric key pair comprises a first public key and a first private key; and
running, by the first computing device, the registration agent component to obtain the remote attestation report of the registration agent component based on the random number and the first public key.

5. The method according to claim 3, wherein obtaining the remote attestation report of the registration agent component based on the random number comprises:
running, by the first computing device, the registration agent component to generate a first asymmetric key pair, wherein the first asymmetric key pair comprises a first public key and a first private key;
running, by the first computing device, the registration agent component to generate a certificate signing request CSR of the registration agent component based on the first asymmetric key pair; and
running, by the first computing device, the registration agent component to obtain the remote attestation report of the registration agent component based on the random number and the CSR.

6. The method according to claim 4 or 5, wherein
the private key is the first private key.

7. The method according to claim 4 or 5, wherein
the private key is generated and provided by the challenger to the registration agent component after verification of the challenger on the remote attestation report of the registration agent component succeeds.

8. The method according to claim 7, wherein the challenger is a certificate service component run on the first computing device, the certificate service component is deployed in a normal world of the first computing device, and the method further comprises:
running, by the first computing device, the certificate service component to generate the certificate and the private key when the verification on the remote attestation report of the registration agent component succeeds;
running, by the first computing device, the certificate service component to generate a symmetric key and obtain the first public key in the remote attestation report of the registration agent component;
running, by the first computing device, the certificate service component to encrypt the certificate and the private key using the symmetric key, to obtain a first digest;
running, by the first computing device, the certificate service component to encrypt the symmetric key using the first public key, to obtain a second digest; and
running, by the first computing device, the certificate service component to provide the first digest and the second digest to the registration agent component.

9. The method according to claim 8, wherein the method further comprises:
running, by the first computing device, the registration agent component to decrypt the second digest using the first private key, to obtain the symmetric key; and
running, by the first computing device, the registration agent component to decrypt the first digest using the symmetric key, to obtain the certificate and the private key.

10. The method according to claim 8 or 9, further comprising:
running, by the first computing device, the certificate service component to send a CSR of the certificate service component to a verifier; and
running, by the first computing device, the certificate service component to receive a certificate issued by the verifier to the certificate service component, wherein the certificate of the certificate service component is generated by the verifier when verification on the CSR of the certificate service component succeeds.

11. The method according to any one of claims 1 to 6, wherein the challenger is a verifier, or the challenger is a second computing device, and the second computing device is verified by the verifier.

12. A remote attestation method, comprising:
initiating, by a challenger, a remote attestation challenge to a registration agent component run in a trusted execution environment of a first computing device, wherein the registration agent component and an application are deployed in the trusted execution environment; and
providing, by the challenger, a certificate to the registration agent component, so that the registration agent component configures the certificate for the application, wherein the remote attestation report is provided by the registration agent component to the challenger in response to the remote attestation challenge, and the certificate is used by the first computing device to establish, when the first computing device loads the application in the trusted execution environment, an encrypted channel between the application and a client based on the certificate and a private key.

13. The method according to claim 12, further comprising:
providing, by the challenger, the private key to the registration agent component, wherein the private key is generated by the challenger after verification on the remote attestation report of the registration agent component succeeds.

14. The method according to claim 13, wherein the method comprises:
generating, by the challenger, the certificate and the private key when the verification on the remote attestation report succeeds;
generating, by the challenger, a symmetric key, and obtaining a first public key in the remote attestation report of the registration agent component;
encrypting, by the challenger, the certificate and the private key using the symmetric key, to obtain a first digest; and
encrypting, by the challenger, the symmetric key using the first public key, to obtain a second digest; and
providing, by the challenger, the private key to the registration agent component comprises:
providing, by the challenger, the first digest and the second digest to the registration agent component.

15. The method according to any one of claims 12 to 14, wherein before initiating, by the challenger, the remote attestation challenge to the registration agent component run in the trusted execution environment of the first computing device, the method further comprises:
sending, by the challenger, a certificate signing request CSR of the challenger to a verifier; and
receiving, by the challenger, a certificate of the challenger issued by the verifier, wherein the certificate of the challenger is generated by the verifier when verification on the CSR of the challenger succeeds.

16. A remote attestation apparatus, comprising an application and a registration agent component, wherein the application and the registration agent component are deployed in a trusted execution environment, and the registration agent component is used to:
before the application is started, obtain a certificate provided by a challenger to the registration agent component; and
configure the certificate and a private key for the application, wherein the certificate and the private key are used to establish an encrypted channel between the application and a client.

17. The apparatus according to claim 16, wherein
the application is used to establish the encrypted channel between the application and the client based on the certificate and the private key.

18. The apparatus according to claim 16 or 17, wherein the remote attestation apparatus further comprises a certificate service component, and the certificate service component is used to:
generate the certificate and the private key when verification on a remote attestation report of the registration agent component succeeds;
generate a symmetric key, and obtain the first public key in the remote attestation report of the registration agent component;
encrypt the certificate and the private key using the symmetric key, to obtain a first digest;
encrypt the symmetric key using the first public key, to obtain a second digest; and
providing the first digest and the second digest to the registration agent component.

19. A remote attestation apparatus, comprising:
a processing module, configured to initiate a remote attestation challenge to a registration agent component run in a trusted execution environment of a first computing device, wherein the registration agent component and an application are deployed in the trusted execution environment of the first computing device; and
a communication module, configured to send the remote attestation challenge to the first computing device, wherein
the processing module is further configured to generate a certificate of the registration agent component when verification on a remote attestation report of the registration agent component succeeds, so that the registration agent component configures the certificate for the application, wherein the remote attestation report is provided by the registration agent component to the challenger in response to the remote attestation challenge, and the certificate is used by the first computing device to establish, when the first computing device loads the application in the trusted execution environment, an encrypted channel between the application and a client based on the certificate and a private key; and
the communication module is further configured to send the certificate to the first computing device.

20. A computing device, comprising a processor and a memory, wherein the memory is configured to store instructions, the processor is configured to execute the instructions, and when the processor executes the instructions, the method according to any one of claims 1 to 11 is implemented.

21. A computing device, comprising a processor and a memory, wherein the memory is configured to store instructions, the processor is configured to execute the instructions, and when the processor executes the instructions, the method according to any one of claims 12 to 15 is implemented.

22. A computer-readable storage medium, comprising computer program instructions, wherein when the computer program instructions are executed by a computing device, the computing device implements the method according to any one of claims 1 to 11.

23. A computer-readable storage medium, comprising computer program instructions, wherein when the computer program instructions are executed by a computing device, the computing device implements the method according to any one of claims 12 to 15.
